(19) Europäisches Patentamt / European Patent Office / Office européen des brevets

(11) **EP 4 745 909 A1**

(12) **DEMANDE DE BREVET EUROPEEN**

(43) Date de publication:
20.05.2026 Bulletin 2026/21

(21) Numéro de dépôt: 25215605.4

(22) Date de dépôt: 13.11.2025

(51) Classification Internationale des Brevets (IPC):
$G06V\ 10/62^{(2022.01)}$  $G06V\ 10/74^{(2022.01)}$
$G06V\ 10/82^{(2022.01)}$  $G06V\ 20/52^{(2022.01)}$

(52) Classification Coopérative des Brevets (CPC):
G06V 20/52; G06V 10/62; G06V 10/761;
G06V 10/82

(84) Etats contractants désignés:
AL AT BE BG CH CY CZ DE DK EE ES FI FR GB
GR HR HU IE IS IT LI LT LU LV MC ME MK MT NL
NO PL PT RO RS SE SI SK SM TR
Etats d'extension désignés:
BA
Etats de validation désignés:
GE KH LA MA MD TN

(30) Priorité: 14.11.2024 FR 2412416

(71) Demandeurs:
• THALES
92190 Meudon (FR)
• Thales Solutions Asia Pte Ltd.
Singapore 498788 (SG)

(72) Inventeurs:
• HAUGEARD, Jean-Emmanuel
91767 Palaiseau (FR)
• BLASCO LOPEZ, Solene
91767 Palaiseau (FR)
• MA, Hwee Chee
139941 Singapore (SG)
• CHEN, Liwei
139941 Singapore (SG)

(74) Mandataire: Lavoix
2, place d'Estienne d'Orves
75441 Paris Cedex 09 (FR)

(54) **PROCÉDÉ ET SYSTÈME DE LOCALISATION D'INDIVIDUS DANS UN ESPACE DE SURVEILLANCE**

(57) Le système (2) de localisation d'individus comporte une pluralité de capteurs (4A, 4B, 4C) d'au moins deux catégories de capteurs distinctes et un dispositif de localisation (6), adapté pour acquérir des données de localisation de capteur (23At, 23Bt, 23Ct), relatives à au moins un individu. Le dispositif (6) implémente, pour au moins une paire de capteurs, de modules de fusion (26, 28, 30) des données de localisation de capteur fournies par les capteurs de ladite paire de capteurs à un instant temporel courant, permettant d'obtenir au moins une donnée de localisation ajustée (25t), et de calcul (34) d'au moins une donnée de localisation consolidée (29t), à l'instant temporel courant, comportant une fusion de l'au moins une donnée de localisation ajustée (25t) et d'au moins une donnée de localisation prédite (27t) à partir d'au moins une donnée de localisation consolidée précédente, associée à un instant temporel précédent.

FIG.1

EP 4 745 909 A1

**Description**

La présente invention concerne un procédé de localisation d'individus dans un espace de surveillance.

Elle concerne également un système de localisation associé et un programme d'ordinateur associé.

L'invention se situe dans le domaine général de la vidéosurveillance, et trouve de nombreuses applications dans des domaines tels que la gestion d'infrastructure, la robotique ou la navigation autonome.

La localisation précise d'individus, susceptibles de se déplacer dans un espace de surveillance, est utile pour garantir la sécurité en général et optimiser diverses opérations. L'espace de surveillance est par exemple une infrastructure commerciale ou de transport (gare, aéroport etc) ou tout autre lieu susceptible d'accueillir du public, ou bien l'intérieur d'un véhicule de transport ou encore un carrefour routier. Bien entendu cette liste n'est pas exhaustive.

Divers systèmes de localisation d'individus à base de capteurs permettant d'obtenir des successions d'images (i.e. des vidéos), 2D ou 3D de l'espace de surveillance, ont été proposés. Les capteurs utilisés comprennent notamment des caméras de vidéosurveillance optiques ou infrarouges, des caméras temps de vol ou TOF (acronyme de « Time Of Flight »), ou encore des capteurs Lidar 3D.

Les divers capteurs connus présentent des faiblesses de fonctionnement selon les cas d'application, et ne parviennent pas à fournir systématiquement une précision suffisante. En effet, certains capteurs sont moins performants dans certaines conditions d'illumination ou de densité de foule, donc ils ne sont pas robustes à tout type de situation.

De plus, le coût de certains capteurs est particulièrement élevé, il est donc difficile d'en utiliser un grand nombre.

Pour améliorer la précision de localisation des individus, des solutions à base de port d'un badge à émetteur radiofréquence (RFID) ou à base d'autres émetteurs portés par les individus ont été proposées. Ces solutions sont néanmoins intrusives et non appropriées pour un espace de surveillance public.

L'invention a pour objet de remédier aux inconvénients de l'état de la technique en proposant une solution permettant une localisation d'individus plus précise et plus robuste aux modifications contextuelles, tout en n'étant pas intrusive.

A cet effet, l'invention propose, selon un aspect, un procédé de localisation d'individus dans un espace de surveillance, comportant une succession temporelle d'acquisitions de données de localisation, dites données de localisation de capteur, d'au moins un individu, obtenues à partir de données acquises par une pluralité de capteurs distincts, les capteurs appartenant à au moins deux catégories de capteurs distinctes. Ce procédé comporte des étapes de :

- pour au moins une paire de capteurs choisie, fusion des données de localisation de capteur fournies par les capteurs de ladite paire de capteurs à un instant temporel courant, permettant d'obtenir au moins une donnée de localisation ajustée associée à l'instant temporel courant et à ladite paire de capteurs,
- calcul d'au moins une donnée de localisation consolidée, associée à l'instant temporel courant, ledit calcul comportant :

  o une obtention d'au moins une donnée de localisation consolidée précédente, associée à un instant temporel précédent,
  o une prédiction d'au moins une donnée de localisation prédite pour l'instant temporel courant, à partir de ladite au moins une donnée de localisation précédente,

la fusion de l'au moins une donnée de localisation prédite et de l'au moins une donnée de localisation ajustée. Avantageusement, la prise en compte de données de localisation de capteur d'une pluralité de capteurs et d'au moins une donnée de localisation prédite permet d'améliorer la précision de localisation d'individus à partir de données de multiples capteurs.

Le procédé de localisation d'individus dans un espace de surveillance, selon l'invention peut également présenter une ou plusieurs des caractéristiques ci-dessous, prises indépendamment ou selon toutes les combinaisons techniquement envisageables.

Le procédé comporte une estimation d'un score de confiance associé aux données de localisation de capteur, la fusion de données de localisation de capteur étant fonction dudit score de confiance.

L'estimation d'un score de confiance met en œuvre un moteur d'intelligence artificielle, préalablement entraîné par apprentissage machine pour attribuer un score de confiance aux données de localisation obtenues par chaque capteur en fonction de paramètres de contexte.

L'estimation d'un score de confiance utilise des tables de scores de confiance préalablement enregistrées.

La fusion de données de localisation comporte des étapes de calcul d'une matrice de distance entre des premières données de localisation issues d'un premier capteur et des deuxièmes données de localisation issues d'un deuxième capteur de ladite paire de capteurs, et de mise en correspondance entre premières et deuxièmes données de localisation.

La mise en correspondance met en œuvre un algorithme d'optimisation combinatoire de Munkres.

Le procédé comporte en outre une étape de calcul des données de localisation ajustées en fonction du résultat de l'étape de mise en correspondance et des scores de confiance associés aux données de localisation de capteur.

Le calcul des données de localisation ajustées met en œuvre un calcul de barycentre pondéré par les scores de confiance associés aux données de localisation.

La pluralité de capteurs distincts comportant au moins deux paires de capteurs, et la fusion des données de localisation est mise en œuvre pour chaque paire de capteurs, le procédé comportant en outre une itération de la fusion sur les données de localisation ajustées associées à deux paires de capteurs distinctes.

L'étape de prédiction temporelle met en œuvre un filtrage de Kalman.

Selon un autre aspect, l'invention concerne un système de localisation d'individus dans un espace de surveillance comportant une pluralité de capteurs appartenant à au moins deux catégories de capteurs distinctes et un dispositif de localisation adapté pour effectuer une succession temporelle d'acquisitions de données de localisation, dites données de localisation de capteur, d'au moins un individu, obtenues à partir de données acquises par la pluralité de capteurs distincts, le dispositif comportant un processeur configuré pour mettre en œuvre :

- pour au moins une paire de capteurs choisie, un module de fusion des données de localisation de capteur fournies par les capteurs de ladite paire de capteurs à un instant temporel courant, permettant d'obtenir au moins une donnée de localisation ajustée associée à l'instant temporel courant et à ladite paire de capteurs,
- un module de calcul d'au moins une donnée de localisation consolidée, associée à l'instant temporel courant, ledit calcul comportant

   o un module d'obtention d'au moins une donnée de localisation consolidée précédente, associée à un instant temporel précédent,
   o un module de prédiction d'au moins une donnée de localisation prédite pour l'instant temporel courant, à partir de ladite au moins une donnée de localisation précédente,
   o un module de fusion de l'au moins une donnée de localisation prédite et de l'au moins une donnée de localisation ajustée.

Selon une variante, le système de localisation d'individus est configuré pour mettre en œuvre en outre un module d'estimation d'un score de confiance associé aux données de localisation de capteur, le module de fusion de données de localisation de capteur utilisant lesdits score de confiance pour chaque capteur.

Selon un autre aspect, l'invention concerne un support d'enregistrement d'informations, sur lequel sont mémorisées des instructions logicielles pour l'exécution d'un procédé de localisation d'individus dans un espace de surveillance tel que brièvement décrit ci-dessus, lorsque ces instructions sont exécutées par un dispositif électronique programmable.

Selon un autre aspect, l'invention concerne un programme d'ordinateur comportant des instructions logicielles qui, lorsqu'elles sont mises en œuvre par un dispositif électronique programmable, mettent en œuvre un procédé de localisation d'individus dans un espace de surveillance tel que brièvement décrit ci-dessus.

L'invention apparaîtra plus clairement à la lecture de la description qui va suivre, donnée uniquement à titre d'exemple non limitatif, et faite en référence aux dessins dans lesquels :

   [Fig. 1] la figure 1 représente les principaux blocs fonctionnels d'un système de localisation d'individus dans un espace de surveillance selon une mode de réalisation ;
   [Fig. 2] la figure 2 est un synoptique d'étapes d'un procédé de localisation selon un mode de réalisation;
   [Fig. 3] la figure 3 est un synoptique d'étapes suivant les étapes de la figure 2 d'un procédé de localisation selon un mode de réalisation;
   [Fig 4] la figure 4 est une illustration schématique de données de localisation à diverses étapes du procédé de localisation.

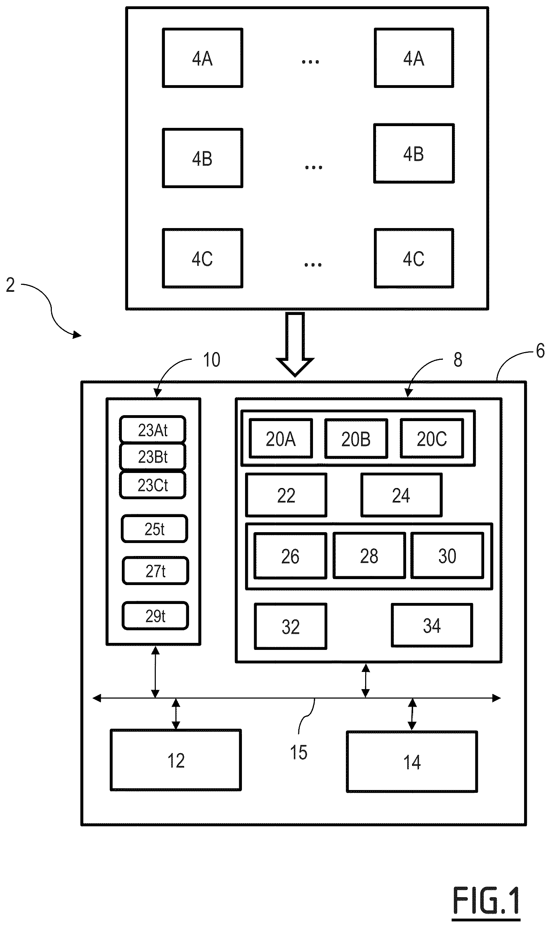

La figure 1 illustre schématiquement un système 2 de localisation d'individus dans un espace de surveillance.

L'espace de surveillance est non représenté.

Le système 2 comporte au moins une paire de capteurs distincts, et dans l'exemple représenté comporte une pluralité de capteurs 4A, 4B, 4C, en nombre variable.

A titre d'exemple, les capteurs appartiennent à plusieurs catégories de capteurs distinctes et comportent par exemple des capteurs d'images bidimensionnelles, en particulier des caméras optiques 4A et/ou des caméras infrarouges 4B, et /ou des caméras TOF 4C qui fournissent des mesures de distance entre la caméra et un individu détecté.

Le nombre de capteurs de chaque catégorie de capteurs est variable selon le cas d'application.

Les capteurs respectifs 4A, 4B, 4C sont positionnés à diverses positions spatiales de l'espace de surveillance, les positions spatiales étant choisies de manière à couvrir l'espace de surveillance par les champs de prise de vue de chacun des capteurs.

On comprend que le terme catégorie de capteurs désigne des capteurs ayant des modes de fonctionnement et des éléments constituants similaires.

Ainsi, les capteurs d'une même catégorie de capteurs ont une performance similaire, mais qui varie en fonction de conditions externes, également appelé contexte de fonctionnement, par exemple des conditions d'illumination, ou de densité de foule dans l'espace de surveillance.

Les divers capteurs sont configurés pour acquérir des successions temporelles de données, par exemple des successions temporelles de données formant des images bidimensionnelles lorsque les capteurs sont des caméras optiques ou infrarouges.

Le système de localisation d'individus 2 comporte également un dispositif de localisation 6, configuré pour communiquer avec les capteurs 4A, 4B, 4C et en particulier configuré pour recevoir des données d'images et/ou des données de localisation de capteur en provenance des capteurs respectifs 4A, 4B, 4C.

Le dispositif de localisation 6 est un dispositif électronique programmable, e.g un ordinateur, et comporte, dans un mode de réalisation, un ou plusieurs processeurs 8, une unité de mémoire électronique 10, une interface d'entrée/sortie 12 et une interface de communication 14, ces éléments étant configurés pour communiquer entre eux via un bus de communication 15 interne au dispositif 6.

L'interface d'entrée/sortie 12 comporte notamment un écran d'affichage, et des moyens de saisie de données (clavier, souris ou pavés tactiles) permettant à un opérateur de surveillance d'effectuer une surveillance de l'espace de surveillance en temps réel.

Dans un mode de réalisation, tel qu'illustré dans la figure 1, le dispositif de localisation 6 comporte des modules 20A, 20B, 20C de calcul de données de localisation de capteur d'au moins un individu à partir des données d'images successives obtenues par les capteurs 4A, 4B, 4C.

En variante, au moins une partie des modules 20A, 20B, 20C sont intégrés dans les capteurs respectifs 4A, 4B, 4C, et les données de localisation de capteur sont fournies par chacun des capteurs 4A, 4B, 4C au dispositif de localisation 6.

Les modules 20A, 20B, 20C mettent en œuvre tout algorithme de localisation spatiale d'individus, adapté pour la catégorie de capteur considérée, permettant d'obtenir des données de localisation de capteur 23At, 23Bt, 23Ct, associées à des instants temporels t.

Dans la suite de la description, on décrit le traitement de données de localisation, suivi dans le temps, d'un individu donné.

Il est à noter que le procédé et système décrits ici pour la localisation d'individus s'appliquent de manière analogue pour la localisation d'autres entités d'intérêt, par exemple des véhicules, des animaux...

Le dispositif de localisation 6 comprend en outre un module 22 de prétraitement des données de localisation de capteurs.

Il comprend en outre un module 24 d'estimation d'un score de confiance associé aux données de localisation de capteur pour chaque capteur. Selon une variante non représentée, le module 24 d'estimation d'un score de confiance regroupe plusieurs modules d'estimation d'un score de confiance, chaque module d'estimation étant associé à une catégorie de capteurs. Le module 24 d'estimation de score de confiance ou chaque module d'estimation de score de confiance permet d'estimer un score de confiance en fonction du capteur, de paramètres et contexte, et en outre, optionnellement, de l'algorithme de localisation mis en œuvre.

Le dispositif de localisation 6 comporte en outre un module de calcul d'une matrice de distance 26, un module de mise en correspondance 28 et un module de post-traitement 30, qui met en œuvre un calcul de données de localisation ajustées. Le modules 26, 28, 30 coopèrent pour réaliser une fusion des données de localisation issues de deux sources distinctes, par exemple d'une paire de capteurs, permettant d'obtenir des données de localisation ajustées 25t associées à l'instant temporel t.

Le dispositif de localisation 6 comporte également un module 32 de prédiction d'une donnée de localisation prédite 27t pour un instant temporel courant à partir d'au moins une donnée de localisation précédente, associée à un instant temporel précédent t-k, par exemple k étant un entier supérieur ou égal à 1, et un module 34 de calcul d'au moins une localisation consolidée 29t associée à un instant temporel courant.

Dans un mode de réalisation, les modules 20, 22, 24, 26, 28, 30, 32, 34 sont réalisés sous forme d'instructions logicielles formant un programme d'ordinateur, qui, lorsqu'il est exécuté par un dispositif électronique programmable, met en œuvre un procédé de localisation d'individus dans un espace de surveillance tel que décrit.

En variante non représentée, les modules 20, 22, 24, 26, 28, 30, 32, 34 sont réalisés chacun sous forme de composants logiques programmables, tels que des FPGA (de l'anglais *Field Programmable Gate Array*), des microprocesseurs, des composants GPU (de l'anglais *General-purpose processing on graphics processing*), ou encore de circuits intégrés dédiés, tels que des ASIC (de l'anglais *Application Specific Integrated Circuit*).

Le programme d'ordinateur comportant des instructions logicielles est en outre apte à être enregistré sur un support d'enregistrement d'informations, non-transitoire et lisible par ordinateur. Ce support lisible par ordinateur est par exemple, un médium apte à mémoriser les instructions électroniques et à être couplé à un bus d'un système informatique. A titre d'exemple, ce support est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

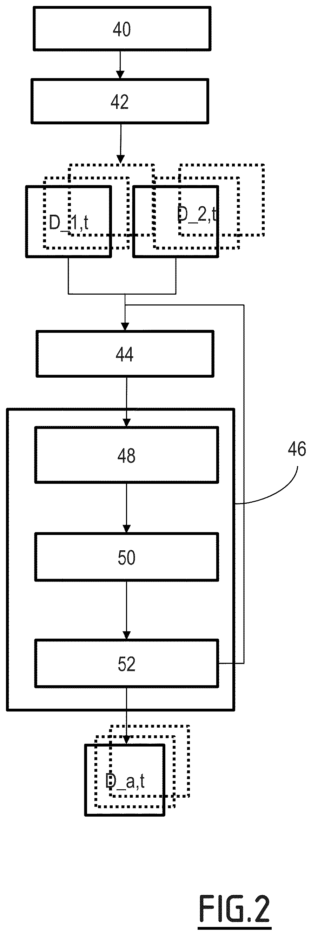

La figure 2 est un synoptique des étapes du procédé de localisation d'individus dans un espace de surveillance, mises en œuvre pour réaliser une première phase de fusion de données de localisation.

Le procédé comporte une première étape 40 d'acquisition de données de localisation de capteurs, issues d'une pluralité de capteurs distincts, appartenant à au moins deux catégories de capteurs distinctes.

Selon les modes de réalisation, soit des données de localisation sont directement fournies par les capteurs, soit un algorithme de calcul de données de localisation de capteur d'au moins un individu à partir des données d'images successives obtenues par les capteurs 4A, 4B, 4C.

Les données de localisation de capteur comportent des coordonnées cartésiennes $(x_i, y_i, z_i)$ d'au moins un point appartenant à l'individu dans un référentiel 3D.

En pratique, pour chaque capteur, les données de localisation de capteur comportent une pluralité de points correspondant à un ou plusieurs individus.

L'étape 40 est suivie d'une étape 42 de prétraitement de normalisation, comportant une correction de distorsions, alignement des coordonnées et normalisation des unités de mesures, permettant d'assurer que les données de localisation de capteur issues de capteurs de catégories de capteurs distinctes sont comparables.

Le procédé comprend ensuite un traitement des données de localisation de capteurs D_1t, D_2t par paires de capteurs.

Les paires de capteurs sont préalablement choisies.

Par exemple, une paire de capteurs regroupe des capteurs de la même catégorie dans une première phase de traitement.

Le procédé comprend alors une étape 44 d'estimation d'un score de confiance associé aux données de localisation de capteur D_1t, D_2t.

Un score de confiance est associé aux données de localisation, en d'autres termes un score de confiance permet d'évaluer la fiabilité des données de localisation obtenues à partir du capteur considéré.

L'estimation 44 d'un score de confiance est fonction de la catégorie de capteur pour chaque capteur de la paire de capteurs considérée, ainsi que du contexte de chaque capteur, par exemple des conditions d'illumination, ou de densité de foule dans l'espace de surveillance.

Avantageusement, l'estimation 44 d'un score de confiance est effectuée dynamiquement, de manière à prendre en compte des éventuelles modifications du contexte susceptibles d'impacter la performance de chaque capteur.

Ainsi, par exemple, en conditions de faible illumination, les données de localisation obtenues à partir d'images fournies par une caméra optique ont un faible score de confiance, alors que les données de localisation obtenues à partir d'images fournies par une caméra infrarouge ont un score de confiance élevé.

Dans un mode de réalisation, l'étape 44 met en œuvre un moteur d'intelligence artificielle, préalablement entraîné par apprentissage machine pour attribuer un score de confiance aux données de localisation obtenues par chaque capteur en fonction de la catégorie du capteur, de paramètres de contexte, par exemple en fonction de l'heure du jour, conditions d'illumination (i.e. exposition du capteur par rapport à une source lumineuse), des conditions météorologiques lorsque le capteur est positionné en extérieur etc.

Par exemple, le moteur d'intelligence artificielle met en œuvre un réseau de neurones.

En variante, l'estimation 44 d'un score de confiance utilise des tables préalablement enregistrées, mises au point à l'aide d'experts, fournissant un score de confiance en fonction de paramètres de contexte, par exemple en fonction de l'heure du jour, des conditions météorologiques lorsque le capteur est positionné en extérieur.

Les paramètres de contexte sont par exemple obtenus à partir de capteurs adéquats distincts ou sont obtenus d'un serveur externe, par exemple un serveur de données météorologiques, par une liaison de communication avec le dispositif de localisation 2.

Le procédé comprend alors une étape 46 de fusion (ou première fusion) des premières données de localisation de capteur D_1t et des deuxièmes données de localisation D_2t.

En pratique, pour chaque capteur de la paire de capteurs, les données de localisation de capteur D_1t, D_2t comportent des nombres différents de points représentés par des coordonnées cartésiennes, par exemple M points pour un premier capteur de la paire de capteurs, N points pour un deuxième capteur de la paire de capteurs, M et N étant des entiers distincts.

La fusion 46 comprend alors une étape 48 de calcul d'une matrice de distance entre les données de localisation D_1t, D_2t, puis une étape 50 de mise en correspondance (ou affectation) entre données de localisation de capteur D_1t issues du premier capteur et données de localisation de capteur D_2t issues du deuxième capteur.

Avantageusement, l'étape 50 de mise en correspondance met en œuvre un algorithme d'optimisation combinatoire de Munkres, connu pour la résolution du problème d'affectation entre entités d'ensembles de cardinaux différents, dans le cas présent entre les M points issus premier capteur et les N points issus deuxième capteur.

Avantageusement, l'algorithme d'optimisation combinatoire de Munkres permet de résoudre le problème d'affectation en un temps polynomial.

La fusion 46 comprend alors une étape 52 de calcul des données de localisation ajustées D_a,t en fonction du résultat de l'étape 50 de mise en correspondance et des scores de confiance associés aux données de localisation de capteur pour chaque capteur.

Dans un mode de réalisation, l'étape 52 met en œuvre un calcul de barycentre pondéré par les scores de confiance associés aux données de localisation.

A titre d'exemple, on considère deux points respectifs P1 de coordonnées cartésiennes (x1,y1,z1) et P2 de coordonnées cartésiennes (x2,y2,z2), qui ont été mis en correspondance à l'étape 50, P1 étant une donnée de localisation de capteur du premier capteur et P2 étant une donnée de localisation de capteur du deuxième capteur.

Lors de l'étape 52, le score de confiance S1, S2 associé à chaque capteur est pris en compte. Par exemple, un nouveau point P3 qui est une donnée de localisation ajustée est obtenu, les coordonnées cartésiennes (x3, y3, z3) de P3 étant calculées par moyenne pondérée des coordonnées cartésiennes des points P1 et P2, de coefficients de pondération déduits des scores de confiance.

Par exemple, les formules suivantes sont appliquées :

$$x_3 = \frac{S_1 x_1 + S_2 x_2}{S_1 + S_2}$$

$$y_3 = \frac{S_1 y_1 + S_2 y_2}{S_1 + S_2}$$

$$z_3 = \frac{S_1 z_1 + S_2 z_2}{S_1 + S_2}$$

Le point P3 est alors le barycentre des points P1 et P2, calculé avec comme coefficients de pondération (ou poids) les scores de confiances S1, S2.

A l'issue de l'étape de fusion 46, des données de localisation ajustées sont ainsi obtenues. Les données de localisation ajustées sont mémorisées.

Les étapes 44 d'estimation de scores de confiance et 46 de fusion de données de localisation sont répétées pour chaque paire de capteurs choisie.

A l'issue de cette première phase de traitement, dans une deuxième phase de traitement, le cas échéant (i.e. si le nombre de paires de capteurs est strictement supérieur à 1), l'étape 46 de fusion de données de localisation est répétée pour fusionner des données de localisation ajustées préalablement calculées, jusqu'à ce que l'au moins une donnée de localisation ajusté D'_a,t correspondant à la pluralité de capteurs soit obtenue.

Les scores de confiance sont également fusionnés, lorsque les données de localisation ajustées issues de deux sources distinctes sont fusionnées, le score de confiance associé est par exemple la moyenne des scores de confiance de chaque source de données.

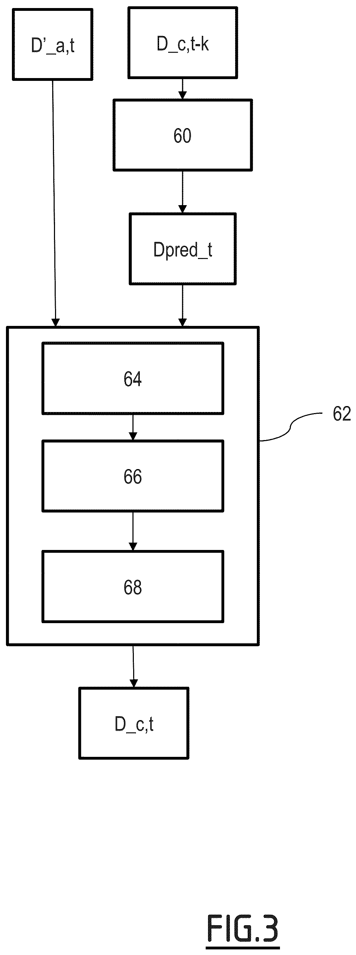

Le procédé comporte ensuite un calcul d'au moins une donnée de localisation consolidée, comme expliqué ci-après en référence à la figure 3.

Le procédé comprend alors l'acquisition d'au moins une donnée de localisation consolidée précédente D_c,t-k, associée à un instant temporel précédent t-k, par exemple t-1, et une prédiction temporelle 60 d'au moins une donnée de localisation prédite Dpred_t, pour l'instant temporel courant t, à partir de l'au moins une donnée de localisation consolidée précédente D_c,t-k.

L'étape de prédiction temporelle 60 met en œuvre par exemple un filtrage de Kalman.

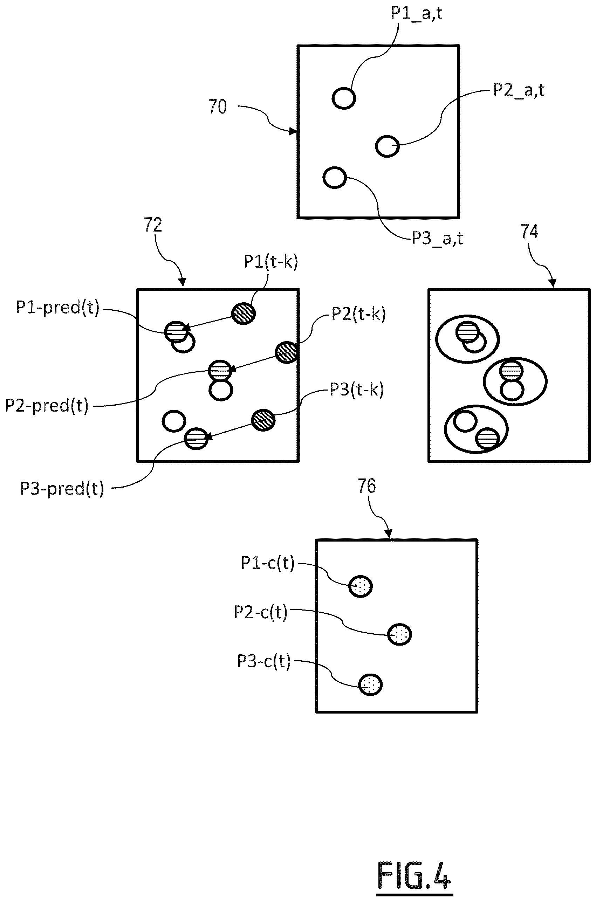

En d'autres termes, pour chaque point P1(t-k), P2(t-k), P3(t-k) correspondant aux données de localisation consolidées à l'instant temporel t-k, un point prédit P1-pred(t), P2-pred(t), P3-pred(t) est obtenu, comme illustré schématiquement dans la figure 4.

L'au moins une donnée de localisation ajustée D'_a,t correspondant à la pluralité de capteurs et l'au moins une donnée de localisation prédite Dpred_t sont fournies en entrée d'une étape de fusion 62 (deuxième fusion).

L'étape de fusion 62 comporte une étape 64 de calcul d'une matrice de distance entre les données de localisation ajustées D'_a,t et les données de localisation prédites Dpred_t, analogue à l'étape 48 décrite ci-dessus, puis une étape 66 de mise en correspondance (ou affectation) analogue à l'étape 50 décrite ci-dessus.

Elle comporte ensuite une étape 68 de calcul d'au moins une donnée de localisation consolidée D_c,t, associée à l'instant courant t.

Dans un mode de réalisation, lors de l'étape 68, lorsqu'une association a été faite lors de l'étape de mise en correspondance 66 entre une donnée de localisation prédite Dpred_t, et une donnée de localisation ajustée D'_a,t la donnée de localisation ajustée est retenue comme donnée de localisation consolidée D_c,t.

Selon une variante, les coordonnées cartésiennes de la donnée de localisation consolidée D_c,t sont calculées par la moyenne des coordonnées cartésiennes de la donnée de localisation ajustée D'_a,t et de la donnée de localisation prédite Dpred_t

La figure 4 illustre de manière schématique, à titre d'exemple, dans un même référentiel spatial 2D : des points P1_a,t, P2_a,t, P3_3,t (référence 70 dans la figure 4) correspondant aux données de localisation ajustées calculées pour l'instant t ; des points P1(t-k), P2(t-k), P3(t-k) correspondant aux données de localisation consolidées à l'instant temporel t-k et les points prédits à l'instant temporel t correspondants, notés P1-pred(t), P2-pred(t), P3-pred(t) (référence 72 dans la figure 4). Les résultats de la mise en correspondance 66 sont illustré dans la référence 74 de la figure 4.

Enfin, les points P1-c(t), P2-c(t), P3-c(t) correspondant aux données de localisation consolidées associées à l'instant courant, calculés à partis des points mis en correspondance, sont illustrés dans la référence 76 de la figure 4.

Bien entendu l'exemple de la figure 4 est schématique et simple, les données de localisation à traiter dans les cas pratiques étant bien plus nombreuses.

**Revendications**

**1.** Procédé de localisation d'individus dans un espace de surveillance, comportant une succession temporelle d'acquisitions de données de localisation, dites données de localisation de capteur (23At, 23Bt, 23Ct), d'au moins un individu, obtenues à partir de données acquises par une pluralité de capteurs distincts (4A, 4B, 4C), les capteurs appartenant à au moins deux catégories de capteurs distinctes, le procédé étant **caractérisé en ce qu'**il comporte des étapes de :

- pour au moins une paire de capteurs choisie, fusion (46) des données de localisation de capteur fournies par les capteurs de ladite paire de capteurs à un instant temporel courant, permettant d'obtenir au moins une donnée de localisation ajustée associée à l'instant temporel courant et à ladite paire de capteurs,
- calcul d'au moins une donnée de localisation consolidée, associée à l'instant temporel courant, ledit calcul comportant

o Une obtention d'au moins une donnée de localisation consolidée précédente, associée à un instant temporel précédent,
o Une prédiction temporelle (60) d'au moins une donnée de localisation prédite pour l'instant temporel courant, à partir de ladite au moins une donnée de localisation précédente,
o Une fusion (62) de l'au moins une donnée de localisation prédite et de l'au moins une donnée de localisation ajustée.

2. Procédé selon la revendication 1, comportant une estimation (44) d'un score de confiance associé aux données de localisation de capteur, la fusion (46) de données de localisation de capteur étant fonction dudit score de confiance.

3. Procédé selon la revendication 2, dans lequel l'estimation (44) d'un score de confiance met en œuvre un moteur d'intelligence artificielle, préalablement entraîné par apprentissage machine pour attribuer un score de confiance aux données de localisation obtenues par chaque capteur en fonction de paramètres de contexte.

4. Procédé selon la revendication 2, dans lequel l'estimation (44) d'un score de confiance utilise des tables de scores de confiance préalablement enregistrées.

5. Procédé selon l'une quelconque des revendications 2 à 4, dans lequel la fusion (46) de données de localisation comporte des étapes de calcul (48) d'une matrice de distance entre des premières données de localisation issues d'un premier capteur et des deuxièmes données de localisation issues d'un deuxième capteur de ladite paire de capteurs, et de mise en correspondance (50) entre premières et deuxièmes données de localisation.

6. Procédé selon la revendication 5, dans lequel ladite mise en correspondance (50) met en œuvre un algorithme d'optimisation combinatoire de Munkres.

7. Procédé selon l'une des revendications 5 ou 6, comportant en outre une étape de calcul des données de localisation ajustées (52) en fonction du résultat de l'étape de mise en correspondance et des scores de confiance associés aux données de localisation de capteur.

8. Procédé selon la revendication 7, dans lequel le calcul des données de localisation ajustées (52) met en œuvre un calcul de barycentre pondéré par les scores de confiance associés aux données de localisation.

9. Procédé selon l'une quelconque des revendications 1 à 8, la pluralité de capteurs distincts comportant au moins deux paires de capteurs, dans lequel la fusion des données de localisation (46) est mise en œuvre pour chaque paire de capteurs, le procédé comportant en outre une itération de la fusion sur les données de localisation ajustées associées à deux paires de capteurs distinctes.

10. Procédé selon l'une quelconque des revendications 1 à 9, dans lequel l'étape de prédiction temporelle (60) met en œuvre un filtrage de Kalman.

11. Programme d'ordinateur, comportant des instructions logicielles qui lorsqu'elles sont exécutées par un dispositif électronique programmable, mettent en œuvre un procédé de localisation d'individus dans un espace de surveillance conforme aux revendications 1 à 10.

12. Système de localisation d'individus dans un espace de surveillance, comportant une pluralité de capteurs (4A, 4B, 4C) appartenant à au moins deux catégories de capteurs distinctes et un dispositif de localisation (6) adapté pour effectuer une succession temporelle d'acquisitions de données de localisation, dites données de localisation de capteur, d'au moins un individu, obtenues à partir de données acquises par la pluralité de capteurs distincts, le dispositif (6) étant **caractérisé en ce qu'**il comporte un processeur (8) configuré pour mettre en œuvre :

- pour au moins une paire de capteurs choisie, un module de fusion (26, 28, 30) des données de localisation de capteur fournies par les capteurs de ladite paire de capteurs à un instant temporel courant, permettant d'obtenir au moins une donnée de localisation ajustée associée à l'instant temporel courant et à ladite paire de capteurs,
- un module de calcul (34) d'au moins une donnée de localisation consolidée, associée à l'instant temporel courant, configuré pour mettre en oeuvre :

> o un module d'obtention d'au moins une donnée de localisation consolidée précédente, associée à un instant temporel précédent,
> o un module de prédiction d'au moins une donnée de localisation prédite pour l'instant temporel courant, à partir de ladite au moins une donnée de localisation précédente,
> o un module de fusion de l'au moins une donnée de localisation prédite et de l'au moins une donnée de localisation ajustée.

13. Système de localisation d'individus selon la revendication 12, configuré pour mettre en œuvre en outre un module (24) d'estimation d'un score de confiance associé aux données de localisation de capteur, le module de fusion de données de localisation de capteur utilisant lesdits score de confiance.

FIG.1

40

42

D_1,t    D_2,t

44

48

50    46

52

D_a,t

FIG.2

```
┌──────────┐      ┌──────────┐
│  D'_a,t  │      │  D_c,t-k │
└────┬─────┘      └────┬─────┘
     │                 │
     │                 ▼
     │            ┌──────────┐
     │            │    60    │
     │            └────┬─────┘
     │                 │
     │                 ▼
     │            ┌──────────┐
     │            │  Dpred_t │
     │            └────┬─────┘
     │                 │
     ▼                 ▼
 ┌───────────────────────────────┐
 │   ┌───────────────────────┐   │
 │   │          64           │   │
 │   └───────────┬───────────┘   │
 │               │               │ ___ 62
 │               ▼               │
 │   ┌───────────────────────┐   │
 │   │          66           │   │
 │   └───────────┬───────────┘   │
 │               │               │
 │               ▼               │
 │   ┌───────────────────────┐   │
 │   │          68           │   │
 │   └───────────────────────┘   │
 └───────────────┬───────────────┘
                 │
                 ▼
           ┌──────────┐
           │  D_c,t   │
           └──────────┘
```

<u>FIG.3</u>

P1_a,t

P2_a,t

70

P3_a,t

72

P1-pred(t)

P1(t-k)

P2(t-k)

74

P2-pred(t)

P3(t-k)

P3-pred(t)

76

P1-c(t)

P2-c(t)

P3-c(t)

## FIG.4

| | Europäisches Patentamt European Patent Office Office européen des brevets | **RAPPORT DE RECHERCHE EUROPEENNE** | Numéro de la demande **EP 25 21 5605** |
|---|---|---|---|

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2021/117659 A1 (FOROOZAN FOROOHAR [CA] ET AL) 22 avril 2021 (2021-04-22) | 1,2,4-13 | INV. G06V10/62 |
| A | * figure 1 * * figure 4 * * figures 7,8 * * figures 14,15 * | 3 | G06V10/74 G06V10/82 G06V20/52 |
| | ----- | | |
| X | SENEL NUMAN ET AL: "Multi-Sensor Data Fusion for Real-Time Multi-Object Tracking", PROCESSES, vol. 11, no. 2, 7 février 2023 (2023-02-07), page 501, XP093270381, CH ISSN: 2227-9717, DOI: 10.3390/pr11020501 * le document en entier * | 1,2,4-13 | |
| | ----- | | |
| X | RICCARDO PIERONI ET AL: "Multi-Object Tracking with Camera-LiDAR Fusion for Autonomous Driving", ARXIV.ORG, CORNELL UNIVERSITY LIBRARY, 201 OLIN LIBRARY CORNELL UNIVERSITY ITHACA, NY 14853, 12 mai 2024 (2024-05-12), XP091753913, * le document en entier * | 1,2,4-13 | DOMAINES TECHNIQUES RECHERCHES (IPC) G06V |
| | ----- | | |

Le présent rapport a été établi pour toutes les revendications

| Lieu de la recherche | Date d'achèvement de la recherche | Examinateur |
|---|---|---|
| La Haye | 17 décembre 2025 | Martinière, Anthony |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 25 21 5605

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-12-2025

| Document brevet cité au rapport de recherche | Date de publication | Membre(s) de la famille de brevet(s) | Date de publication |
|---|---|---|---|
| US 2021117659 A1 | 22-04-2021 | AUCUN | |

EPO FORM P0460

Pour tout renseignement concernant cette annexe : voir Journal Officiel de l'Office européen des brevets, No.12/82